# EUROPEAN PATENT APPLICATION

(11) **EP 4 096 056 A1**
(43) Date of publication of application: **30.11.2022**
(21) Application number: 21745095.6
(22) Date of filing: 05.01.2021
(51) Int. Cl.: H02J 13/00, H01M 10/42, H01M 10/44, H01M 10/48, G06Q 50/06, H02J 3/00, H02J 3/14, H02J 3/32

(54) **STORAGE BATTERY CONTROL DEVICE, METHOD FOR CONTROLLING STORAGE BATTERY AND STORAGE BATTERY CONTROL PROGRAM**

(30) Priority: 22.01.2020 JP 2020008539
(71) Applicant: Kyocera Corporation, Kyoto-shi, Kyoto 612-8501 (JP)
(72) Inventor: JOKO, Shingo, Kyoto-shi, Kyoto 612-8501 (JP)
(74) Representative: TBK
(86) International application number: PCT/JP2021/000103
(87) International publication number: WO 2021/149477

(57) **Abstract**

Provided is a control device for controlling a storage battery. The control device includes a communication unit and a control unit. The communication unit communicates with the storage battery in a wired or wireless manner. The control unit controls the communication unit to send a control signal, to the storage battery, that causes the storage battery to operate in a first mode or a second mode. The first mode is a mode in which the width of changes over time in power bought or sold by a power control system connected to the storage battery is controlled to stay within a prescribed range. The second mode is mode in which the width of changes over time in power charged to or discharged from the storage battery is controlled to stay within a prescribed range.

## Description

### Cross Reference to Related Application

This application claims priority of Japanese Patent Application No. 2020-8539 filed in Japan on January 22, 2020, the entire disclosure of which is hereby incorporated by reference.

### Technical Field

The present disclosure relates to a storage battery control device, a storage battery control method, and a storage battery control program.

### Background Art

In recent years, in order to maintain the balance between the supply and demand of power in power systems, technologies are known in which electric utility companies that supply power to consumer facilities communicate with control devices that control electrical equipment at the consumer facilities so as to manage the power consumption of the consumer facilities. For example, PTL 1 discloses a server that communicates with consumer facilities in order to carry out demand response requests made by electric utility companies in order to reduce power consumption at the consumer facilities.

In addition, recently, installation of storage batteries at consumer facilities is increasing. Various technologies for charging and discharging storage batteries have been proposed. For example, PTL 2 discloses an aggregation system that includes a server that sends control commands to the control device of each consumer. In this system, each control device controls charging and discharging of the corresponding storage battery so that the power input from the system is less than or equal to the allocated amount specified in the control command or so that the power output to the system is greater than or equal to the allocated amount.

### Citation List

### Patent Literature

PTL 1: Japanese Unexamined Patent Application Publication No. 2017-27448
PTL 2: Japanese Unexamined Patent Application Publication No. 2018-33213

### Summary of Invention

A device according to an embodiment is a control device for controlling a storage battery, the device including
a communication unit that communicates with the storage battery in a wired or wireless manner, and
a control unit that controls the communication unit to send a control signal to the storage battery that causes the storage battery to operate in a first mode or a second mode.

The first mode is a mode in which a width of changes over time in power bought or sold by a power control system connected to the storage battery is controlled to stay within a prescribed range.

The second mode is a mode in which a width of changes over time in power charged to or discharged from the storage battery is controlled to stay within a prescribed range.

A device according to an embodiment is a control device for controlling a plurality of storage batteries, the device including
a communication unit that communicates with the plurality of storage batteries in a wired or wireless manner, and
a control unit that controls the communication unit to send a control signal to at least one of the plurality of storage batteries that causes the storage battery to operate in a first mode or a second mode.

The first mode is a mode in which a width of changes over time in power bought or sold by each power control system connected to at least one of the plurality of storage batteries is controlled to stay within a prescribed range.

The second mode is a mode in which a width of changes over time in power charged to or discharged from at least one of the plurality of storage batteries is controlled to stay within a prescribed range.

A method according to an embodiment is a method for controlling a storage battery, the method including
a communication step of communicating with the storage battery in a wired or wireless manner, and
a control step of performing control to send, to the storage battery, a control signal that causes the storage battery to operate in a first mode or a second mode.

The first mode is a mode in which a width of changes over time in power bought or sold by a power control system connected to the storage battery is controlled to stay within a prescribed range.

The second mode is a mode in which a width of changes over time in power charged to or discharged from the storage battery is controlled to stay within a prescribed range.

A program according to an embodiment is a program for controlling a storage battery, the program causing a computer to execute
a communication step of communicating with the storage battery in a wired or wireless manner, and
a control step of performing control to send, to the storage battery, a control signal that causes the storage battery to operate in a first mode or a second mode.

The first mode is a mode in which a width of changes over time in power bought or sold by a power control system connected to the storage battery is controlled to stay within a prescribed range.

The second mode is a mode in which a width of changes over time in power charged to or discharged from the storage battery is controlled to stay within a prescribed range. Brief Description of Drawings

[Fig. 1] Fig. 1 is a schematic configuration diagram illustrating a system according to an embodiment.
[Fig. 2] Fig. 2 is a block diagram illustrating the configuration of a control device according to an embodiment.
[Fig. 3] Fig. 3 is a diagram illustrating an example of a control signal sent by a control device according to an embodiment.
[Fig. 4] Fig. 4 is a diagram illustrating an example of a control signal sent by a control device according to an embodiment.
[Fig. 5] Fig. 5 is a diagram illustrating an example of a control signal sent by a control device according to an embodiment.
[Fig. 6] Fig. 6 is a diagram illustrating an example of a control signal sent by a control device according to an embodiment.
[Fig. 7] Fig. 7 is a diagram illustrating an example of a control signal sent by a control device according to an embodiment.
[Fig. 8] Fig. 8 is a diagram illustrating an example of a control signal sent by a control device according to an embodiment.
[Fig. 9] Fig. 9 is a flowchart illustrating the flow of processing of a control device according to an embodiment.
[Fig. 10] Fig. 10 is a flowchart illustrating the flow of processing of a control device according to an embodiment.
[Fig. 11] Fig. 11 is a flowchart illustrating the flow of processing of a control device according to an embodiment.
[Fig. 12] Fig. 12 is a flowchart illustrating the flow of processing of a control device according to an embodiment.

### Description of Embodiments

In power control systems including storage batteries, relatively high precision may be required for power control performed when handling demand response requests and so forth. Furthermore, there is a concern that when storage batteries are charged and discharged with relatively high precision, the lifespan of storage batteries will be affected. It would be very beneficial if degradation of storage batteries could be reduced while improving the precision of power control when handling demand response requests and so forth. An object of the present disclosure is to provide a storage battery control device, a storage battery control method, and a storage battery control program that enable degradation of a storage battery to be reduced while increasing the precision of power control when handling demand response requests and so forth. A storage battery control device, a storage battery control method, and a storage battery control program according to an embodiment are able to reduce degradation of a storage battery while increasing precision of power control when handling demand response requests and so forth. Hereafter, a storage battery control device, a storage battery control method, and a storage battery control program according to an embodiment will be described while referring to the drawings.

It should be noted that the drawings are schematic drawings and the proportions of the dimensions and so forth may differ from the actual proportions of the dimensions and so forth. Therefore, specific dimensions and so forth should be determined with reference to the following description. In addition, there may be parts that have different dimensional relationships or proportions from one drawing to another drawing.

### (System)

Hereafter, a system according to an embodiment will be described.

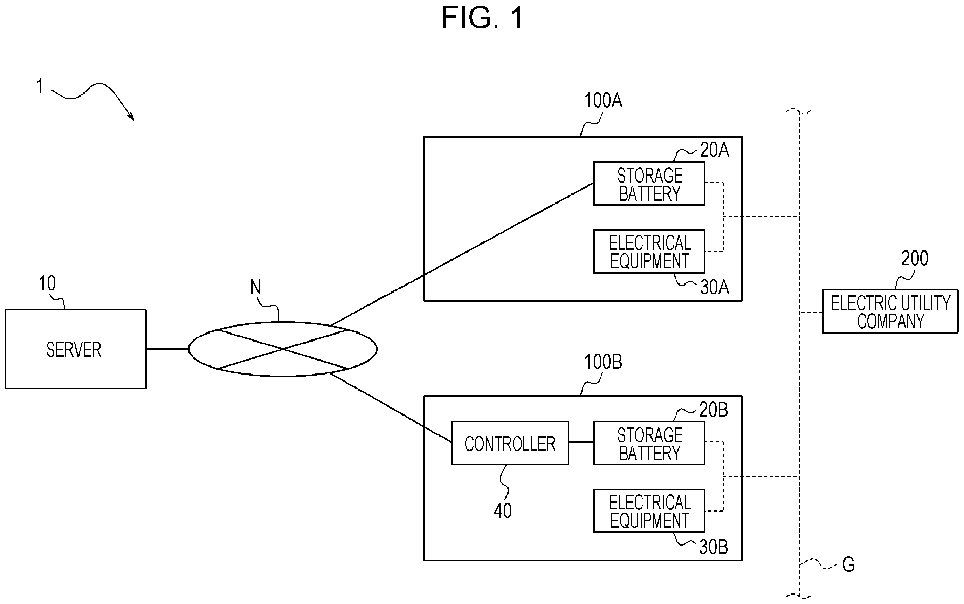

Fig. 1 is a schematic configuration diagram illustrating an example of a system according to an embodiment. In Fig. 1, a system 1 may include a server 10, a power control system 100A, and a power control system 100B.

The server 10 may be, for example, a power management server managed by an electric utility company such as a power generation company, a power transmission and distribution company, a retailer, or an aggregator. The server 10 may consist of information processing devices such as one or a plurality of server devices that can communicate with each other. The server 10 according to an embodiment may function as a control device (storage battery control device) that controls a storage battery. The server 10 is further described below.

The power control system 100A may be, for example, a power control system at a consumer facility A. Furthermore, the power control system 100B may be, for example, a power control system at a consumer facility B. The consumer facility A and the consumer facility B may be, for example, ordinary homes or may be stores, factories, or the like. The consumer facility A and the consumer facility B may be any facilities that can be regarded as units of power control. Hereafter, when not particularly distinguished between a plurality of power control systems such as the power control system 100A and the power control system 100B, the power control systems 100A and 100B are simply referred to as the "power control system 100". The system 1 illustrated in Fig. 1 represents an example that includes two power control systems, namely, the power control system 100A and the power control system 100B for simplicity of description. However, the system 1 according to an embodiment may include any number, such as one or more, of power control systems 100. In other words, the system 1 illustrated in Fig. 1 may include power control systems 100 for any number of consumer facilities.

The power control system 100 may be, for example, a power control system that includes a home energy management system (HEMS) installed at a consumer facility. However, the power control system 100 is not limited to a power control system including an HEMS and may be a power control system including any information processing device that controls electrical equipment installed at a consumer facility.

In Fig. 1, the solid lines connecting individual functional blocks represent paths along which control signals or information to be communicated are mainly sent (hereafter, also referred to as "communication paths"). Furthermore, in Fig. 1, broken lines connecting individual functional blocks represent paths along which power is mainly sent (hereafter, "power paths").

As illustrated in Fig. 1, in the system 1, the server 10, the power control system 100A, and the power control system 100B may be connected to each other in a wired or wireless manner in a network N so as to be able to communicate with each other. In other words, communication paths may be formed in a wired or wireless manner via the network N between the server 10, the power control system 100A, and the power control system 100B.

Furthermore, in the system 1, the power control system 100A and the power control system 100B may be connected to a power system G so that the power control system 100A and the power control system 100B can be energized. In addition, in the system 1, an electric utility company 200 may also be energizably connected to the power system G. In other words, power paths may be formed between the power control system 100A and the power control system 100B and the electric utility company 200. In this way, the power control system 100A and the power control system 100B are supplied with power from the power system G or discharge power to the power system G.

Fig. 1 illustrates an example in which the power control systems 100 are connected to one power system G managed by the same electric utility company 200. However, the power control systems 100 may be connected to any power systems. For example, the plurality of power control systems 100 may be connected to any of a plurality of power systems managed by a plurality of different electric utility companies.

The power control system 100 at the consumer facility A may include a storage battery 20A and electrical equipment 30A. Furthermore, the power control system 100 at the consumer facility B may include a storage battery 20B, electrical equipment 30B, and a controller 40. Hereafter, when not particularly distinguishing between a plurality of storage batteries such as the storage battery 20A and the storage battery 20B, the storage batteries will be simply referred to as the "storage battery 20". Furthermore, when not particularly distinguishing between a plurality of pieces of electrical equipment such as the electrical equipment 30A and the electrical equipment 30B, the electrical equipment will be simply referred to as the "electrical equipment 30". Thus, the power control system 100 may include the storage battery 20 and the electrical equipment 30. Furthermore, the power control system 100 may include a controller 40 as appropriate. In Fig. 1, one server 10 and two power control systems 100 are illustrated for simplicity of description. However, the system 1 according to an embodiment may include any numbers of servers 10 and power control systems 100.

The storage battery 20 may be formed of an appropriate storage battery that can be charged with power and can discharge power. For example, the storage battery 20 may consist of a storage battery such as a lithium ion battery or nickel metal hydride battery. The storage battery 20 is able to supply power by discharging the power with which the storage battery 20 has been charged. Furthermore, the storage battery 20 can be charged with at least one out of power out of power supplied from the power system G, power supplied from a solar cell, power supplied from a fuel cell, power supplied from other sources, and so on. In an embodiment, any appropriate power source may be used so long as the storage battery 20 have functions of being charged with power and discharging power. In addition, the storage battery 20 may be, for example, used in an electric vehicle (EV) equipped with an on-board charging system.

The electrical equipment 30 may include various equipment such as electrical appliances that consume power in the power control system 100. In this case, the electrical equipment 30 is a power load that consumes power and may consist of, for example, machines or equipment such as air conditioning equipment and lighting fixtures used in commercial and industrial facilities such as buildings. Furthermore, the electrical equipment 30 may be, for example, an air conditioner, a microwave oven, a television, and various other electrical products used in a home. In Fig. 1, the pieces of electrical equipment 30 are each illustrated as one functional block. However, each pieces of electrical equipment 30 is not limited to being one piece of equipment and can be made up of any number of various pieces of equipment.

Furthermore, the electrical equipment 30 may include various power-generating equipment that generate power in the power control system 100. In this case, the electrical equipment 30 may include, for example, power generating devices such as solar cells and/or fuel cells. The types of solar cells are not limited as long as the solar cells are capable of photoelectric conversion, such as silicon-based polycrystalline solar cells, silicon-based monocrystalline solar cells, or thin-film solar cells such as CIGS. In an embodiment, any suitable power sources may be employed as the solar cells so long as the solar cells are able to generate solar power in order to supply power. Furthermore, the fuel cells may include, for example, cells that use hydrogen to generate DC power through a chemical reaction with oxygen in the air, and other auxiliary equipment. The fuel cells may include cell stacks of fuel cells such as a solid oxide fuel cells (SOFC), polymer electrolyte fuel cells (PEFC), phosphoric acid fuel cells (PAFC), or molten carbonate fuel cells (MCFC), or the like.

Furthermore, the electrical equipment 30 may be, for example, a gas generator that generates power using a gas engine fueled by a prescribed gas or the like. Furthermore the electrical equipment 30 may be any power source that is capable of supplying power by generating or discharging power.

As illustrated in Fig. 1, the storage battery 20 and the electrical equipment 30 are connected to each other by a power path. Therefore, in the power control system 100, the power with which the storage battery 20 has been charged may be discharged to the electrical equipment 30 or consumed by the electrical equipment 30. In addition, in the power control system 100, the storage battery 20 may be charged with power generated by the electrical equipment 30. In this case, the storage battery 20 may supply the power discharged therefrom to an inverter in the power control system 100. Furthermore, the storage battery 20 may be charged with power supplied from the inverter in the power control system 100.

The controller 40 may be, for example, a HEMS installed in a consumer facility. However, the controller 40 is not limited to being a HEMS and may be any suitable information processing device that controls electrical equipment installed in a consumer facility.

As illustrated in Fig. 1, the power control system 100 may include or not include the controller 40 as appropriate. In the case where the storage battery 20 can be controlled by a control signal sent from the server 10, the power control system 100 does not have to include the controller 40 as in the case of the power control system 100A illustrated in Fig. 1. On the other hand, in the case where the storage battery 20 cannot be controlled by a control signal sent from the server 10, the power control system 100 may include the controller 40 as in the case of the power control system 100B illustrated in Fig. 1.

In the system 1, the server 10 may manage power consumption of the consumer by sending and receiving messages to and from the power control system 100. The system 1 may be used, for example, in so-called demand response (DR), in which the power consumption of consumers is managed on the basis of requests from an electric utility company in order to maintain the balance between supply and demand of power in the power system G. In this case, the server 10, for example, sends messages including control commands and so on for the electrical equipment 30 to the power control system 100 installed in the consumer facility. On the other hand, the server 10 receives messages containing information such as the power consumption and operation state of the electrical equipment 30 from the power control systems 100 so as to grasp the power consumption state of the consumer. The server 10 may perform so-called feedback control in which control commands sent to the power control system 100 are modified on the basis of information received from the power control system 100 in order to improve the precision with which power consumption of the consumer is controlled.

The power control systems 100 may, for example, send to the server 10 information that is measured at a prescribed timing such as every hour or every minute and 00 seconds. It may be necessary for the server 10 to receive information measured in the power control system 100 with low delay from the measurement in order to improve the precision of feedback control, for example.

### (Configuration of Server)

Next, the configuration of the server 10 in the system 1 will be described. As described above, the server 10 according to an embodiment may function as the control device of the storage battery 20. In other words, the server 10, which is the control device of the storage battery 20, may have a function of controlling the storage battery 20.

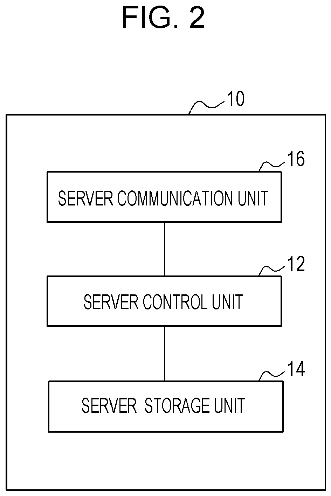

Fig. 2 is a block diagram illustrating the configuration of the server 10 in the system 1 according to an embodiment. As illustrated in Fig. 2, the server 10 includes a server control unit 12, a server storage unit 14, and a server communication unit 16. Thus, the server 10, which functions as a control device of the storage battery 20, may include at least one out of the server control unit 12, the server storage unit 14, and the server communication unit 16. The server control unit 12, the server storage unit 14, and the server communication unit 16 may be connected to each other in a wired or wireless manner so as to be able to communicate with each other.

The server control unit 12 includes one or more processors. The server control unit 12 may consist of a processor such as a central processing unit (CPU) that executes a program defining control procedures or a dedicated processor that is specialized for specific processing. The server control unit 12 may control each functional unit in order to realize various functions in the server 10 such as the server storage unit 14, the server communication unit 16, and so forth described above.

The server storage unit 14 includes one or more memories. Each memory included in the server storage unit 14 may, for example, function as a main storage device, an auxiliary storage device, or a cache memory. The server storage unit 14 stores any information used in operations of the server 10. The server storage unit 14 may be a volatile storage device or a non-volatile storage device. For example, the server storage unit 14 may store system programs, application programs, databases, and so forth. It may be possible to update information stored in the server storage unit 14 with information acquired from the network N via the server communication unit 16, for example.

The server storage unit 14 may, for example, store information relating to the power control system 100. The information relating to the power control system 100 may include information on the types of devices constituting the power control system 100, information on electric utility companies, information on targets of control, and so forth. The information on the types of devices may include, for example, the maker, the model, the model number, and so forth of each device constituting the power control system 100. The information on the electric utility companies may include, for example, information on the electric utility company with which the consumer has a contract or information on the electric utility company of the service area including the consumer facility in which the power control system 100 is installed. The electric utility company of the service area is, for example, a power generation company, a power transmission and distribution company, a retailer, or an aggregator and supplies power to the consumer facility. The information on targets of control may include, for example, the type, power consumption, or number of pieces of electrical equipment 30 to be controlled by the power control system 100.

The server communication unit 16 includes a communication module that can be connected to the network N. The communication module, for example, supports a communication standard such as a wired local area network (LAN) or wireless LAN, but is not limited to these standards and may support any suitable communication standard. In this embodiment, the server 10 is connected to the network N such as the Internet or a dedicated line via the server communication unit 16. Thus, the server 10 can, for example, communicate with the storage battery 20 or the controller 40 and so on in the power control system 100. Thus, the server communication unit 16 may have a function of communicating in a wired or wireless manner with the storage battery 20.

Communication between the server 10 and the power control system 100 (and storage battery 20) may be realized in accordance with any suitable protocol. For example, a protocol that complies with Open ADR is used as such a protocol, but the protocol is not limited to this particular protocol, and a protocol that complies with a standard protocol such as ECHONET Lite (registered trademark), smart energy profile (SEP), or KNX may be used. Furthermore, an original dedicated protocol may be used as the protocol. Communication performed by the server communication unit 16 may be controlled by the server control unit 12, for example. Thus, the server control unit 12 may perform control such that the server communication unit 16 communicates with the storage battery 20 using, for example, a protocol that complies with Open ADR. For example, the server control unit 12 may control the server communication unit 16 so as to communicate with the storage battery 20 using, for example, a protocol that complies with Open ADR.

### (Operation of Server)

Next, operation of the server 10 of the system 1 according to an embodiment will be described. The operation of the server 10 may be realized by controlling each function of the server 10 through processing performed in the server control unit 12. The server 10 communicates with the power control system 100, which is communicatively connected thereto. The server 10 sends a message request to the power control system 100 requesting transmission of a message. Any suitable information may be included in the message request sent from the server 10.

The server 10 may send a message request to the power control system 100 requesting transmission of a message during a period in which a prescribed event takes place. With the message request, the server 10 can cause the power control system 100 to send a message during a period in which a prescribed event takes place. The period during which a prescribed event takes place may be, for example, a demand response period in which the demand response described above takes place. In the following description, it is assumed that the prescribed event is a demand response, but the prescribed event does not have to be a demand response. Furthermore, the demand response may be, for example, an automated demand response (ADR), in which the electrical equipment 30 is automatically controlled by the power control system 100 and so on or a manual demand response (MDR), in which electrical equipment 30 is controlled through operations performed by people.

The server 10 may specify the destination of a message request as each power control system 100. Alternatively, the server 10 may specify the destination of a message request as a group of power control systems 100 determined on the basis of a prescribed condition.

For example, the prescribed condition may be a condition of whether or not a power control system is the target of a demand response request in a demand response period. In such a case, the server 10 determines whether the power control system 100 is the target of a demand response request. For example, the server 10 may receive information on the power control system 100 that is a target of control from the information processing device of the electric utility company 200 requesting a demand response and determine whether the power control system 100 is the target of a demand response request. Hereafter, a demand response period is also referred to as a "DR period" and a demand response request is also referred to as a "DR request".

When the server 10 determines that the power control system 100 is the target of a DR request in a DR period, the server 10 may send a message request to the power control system 100 requesting transmission of a message in the DR period. In addition, when the server 10 determines that the power control system 100 is not the target of a DR request in a DR period, the server 10 may send a message request to the power control system 100 requesting transmission of a message in the DR period.

The server 10 may determine whether the power control system 100 is the target of a DR request on the basis of information relating to the power control system 100 such as information on types of devices, information on electric utility companies, information on targets of control, and so on as described above. For example, on the basis of information on the types of devices, the server 10 may determine that the power control system 100 of a particular maker and a particular model number is the target of a DR request. On the basis of information on electric utility companies, the server 10 may determine that the power control system 100 of a service area in which a demand response is carried out is the target of a DR request. On the basis of information on the targets of control, for example, the server 10 may determine that the power control system 100 that includes the storage battery 20 of the electrical equipment 30 being controlled is the target of a DR request. Alternatively, on the basis of information on the types of devices and information on the electric utility companies, the server 10 may determine that the power control system 100 of a particular maker, out of the power control systems 100 of a service area in which a demand response is carried out, is the target of a DR request.

Next, an operation in which the server 10 controls the storage battery 20 of the power control system 100 will be described.

The server 10 according to an embodiment can control the storage battery 20 by sending a control signal to the storage battery 20 of the power control system 100. For example, the server 10 may send a control signal that causes the storage battery 20 to operate in a number of different operation modes. The server 10 according to an embodiment may send a control signal that causes the storage battery 20 to operate in a first mode or a second mode as described below. At this time, the server control unit 12 of the server 10 may control the server communication unit 16 so as to send a control signal to the storage battery 20 of the power control system 100 that causes the storage battery 20 to operate in the first mode or the second mode. The server control unit 12 may, for example, generate a control signal that causes the storage battery 20 to operate in the first mode or the second mode on the basis of information stored in the server storage unit 14 in advance.

### (Operation Modes of Storage Battery)

Next, the first mode and the second mode will be described as modes of operation of the storage battery 20.

### (First Mode)

The first mode of operation of the storage battery 20 may be a mode in which power bought from or sold to the power system G in the power control system 100 to which the storage battery 20 is connected is controlled so as not to vary by a prescribed value or more. In the case where the storage battery 20 is connected to the power control system 100 of a certain consumer facility, power that is bought from or sold to the power system G by the power control system 100 including that storage battery 20 may change from moment to moment. Power bought and/or sold by the power control system 100 may vary depending on the power supplied by the power control system 100 and the power consumed by the power control system 100. Here, "power supplied by the power control system 100" may refer to power supplied by the electrical equipment 30 (for example, power-generating device) and/or power discharged by the storage battery 20. Furthermore, "power consumed by the power control system 100" may refer to power consumed by the electrical equipment 30 (for example, load device) and/or power with which the storage battery 20 is charged.

The power control system 100 may control power bought from the power system G or power sold to the power system G by controlling power supplied by and/or consumed by the electrical equipment 30 and the power charged to and/or discharged from the storage battery 20. The server 10 according to an embodiment may perform control so that the power bought and/or sold by the power control system 100 does not vary by a prescribed value or more by sending a control signal to the power control system 100.

In the power control system 100, changes over time in the power generated by solar cells and fuel cells among the electrical equipment 30 can be predicted to some extent by referring to past records, for example. Furthermore, in the power control system 100, changes over time in the power consumed by load equipment out of the electrical equipment 30 can also be predicted to some extent by referring to past records, for example. Accordingly, in the power control system 100, control may be performed so that power bought and/or sold by the power control system 100 does not vary by a prescribed value or more by controlling the power charged to or discharged from the storage battery 20 connected to the power control system 100. In this case, the server 10 according to an embodiment may control charging and discharging of the storage battery 20 as described above by sending a control signal to the power control system 100.

As described above, in the first mode, the storage battery 20 may be controlled so that power bought and/or sold by the power control system 100 does not vary by a prescribed value or more. Here, control to ensure that power bought and/or sold by the power control system 100 "does not vary by a prescribed value or more" may be, for example, control performed so that the width of changes in the power over time stays within a prescribed range. Here, control to ensure that the width of changes in the power over time stays within a prescribed range may be, for example, control in which the power stays constant. Hereafter, the first mode may also be referred to as a "constant selling/buying power mode". However, in the first mode, the power that is sold or bought does not necessarily have to stay strictly constant.

Thus, the first mode of operation of the storage battery 20 may be a mode in which the width of changes over time in power bought or sold by the power control system 100 connected to the storage battery 20 is controlled to stay within a prescribed range. In this case, the first mode may be a mode in which charging and discharging of the storage battery 20 is controlled so that the width of changes over time in power sold or bought by the power control system 100 connected to the storage battery 20 is controlled to stay within a prescribed range. Furthermore, the first mode may be a mode in which power sold or bought by the power control system 100 connected to the storage battery 20 is controlled to stay constant.

In operation in the first mode, i.e., the constant selling/buying power mode, control can be performed so as to keep power demand constant (to some extent). However, control may need to be performed at a comparatively high frequency in order to perform control so as to keep power demand constant. The cost of equipment needed to handle such control may be comparatively high. Furthermore, the communication cost of such control may also be comparatively high. In addition, for example, if control delay occurs, the precision of control may deteriorate. Furthermore, in operation in the first mode, i.e., the constant selling/buying power mode, control may also need to be performed at a comparatively high frequency for the storage battery 20. When control of charging and discharging of the storage battery 20 is performed at high frequency, the load on the storage battery 20 may be high and this may cause the storage battery 20 to degrade more quickly.

### (Second Mode)

The second mode of operation of the storage battery 20 may be a mode in which power discharged by the storage battery 20 and/or power charged to the storage battery 20 is controlled so as to not vary by a prescribed value or more. The server 10 according to an embodiment may perform control so that power charged to or discharged from the storage battery 20 does not vary by a prescribed value or more by sending a control signal to the power control system 100 or the storage battery 20 connected to the power control system 100. In this case, the server 10 according to an embodiment may perform control so that power charged to or discharged from the storage battery 20 does not vary by a prescribed value or more by controlling charging and discharging of the storage battery 20.

Here, control to ensure power charged to and/or discharged from the storage battery 20 "does not vary by a prescribed value or more" may be, for example, control performed so that the width of changes in the power over time stays in a prescribed range. Furthermore, control to ensure that the width of changes in the power over time stays within a prescribed range may be, for example, control in which the power stays constant. Hereafter, the second mode may also be referred to as a "constant charging/discharging power mode". However, in the second mode, the power that is charged or discharged does not necessarily have to stay strictly constant.

Thus, the second mode of operation of the storage battery 20 may be mode in which the width of changes over time in the power charged to or discharged from the storage battery 20 is controlled to stay within a prescribed range. In this case, the second mode may be a mode in which the power charged to or discharged from the storage battery 20 is controlled to stay constant.

In operation in the second mode, i.e., the constant charging/discharging power mode, control may be performed so as to keep the charging/discharging power of the storage battery 20 constant (to some extent). When the storage battery 20 operates in the second mode, it is not necessary to perform control at a comparatively high frequency compared to operation in the first mode. Therefore, when the storage battery 20 operates in the second mode, the load on the storage battery 20 is reduced and deterioration of the storage battery 20 may be suppressed compared to operation in the first mode.

### (Switching of Operation Modes of Storage Battery)

As described above, the server 10 according to an embodiment sends, to the power control system 100 or the storage battery 20, a control signal that causes the storage battery 20 to operate in the first mode or the second mode. Therefore, the server 10 can initiate operation of the storage battery 20 in the first mode or the second mode in accordance with a control signal sent to the power control system 100 (or the storage battery 20). In addition, the server 10 can switch the operation mode of the storage battery 20 in accordance with a control signal send to the power control system 100 (or the storage battery 20). For example, the server 10 can send a control signal that will cause the storage battery 20, which is operating in the first mode, to operate in the second mode in order to switch the operation of the storage battery 20 to the second mode. On the other hand, the server 10 can send a control signal that will cause the storage battery 20, which is operating in the second mode, to operate in the first mode in order to switch the operation of the storage battery 20 to the first mode.

Regarding the switching of operation modes described above, in the case where the storage battery 20 can be controlled using a control signal sent from the server 10, the storage battery 20 itself may switch the operation mode. In addition, in the case where the storage battery 20 cannot be controlled using a control signal sent from the server 10, the controller 40 may receive the control signal and the controller 40 may perform control so as to switch the operation mode of the storage battery 20.

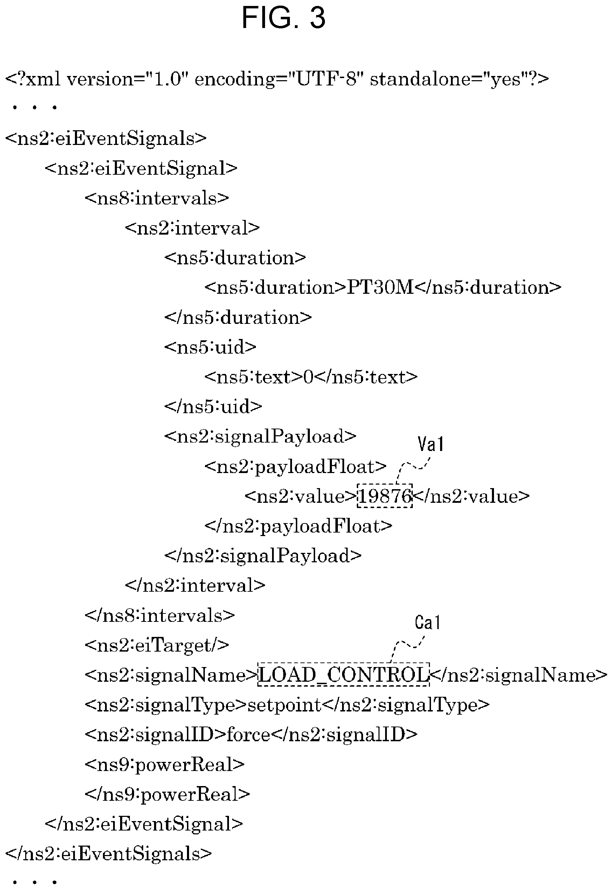

Hereafter, as an example, a control signal that causes the storage battery 20 to operate in the first mode or the second mode in communication using a protocol that complies with Open ADR will be described. For example, in the case where the server 10 sends "oadrDistributeEvent" to the power control system 100, prescribed content inside "eiEventSignals" illustrated in Figs. 3 to 8 may be changed.

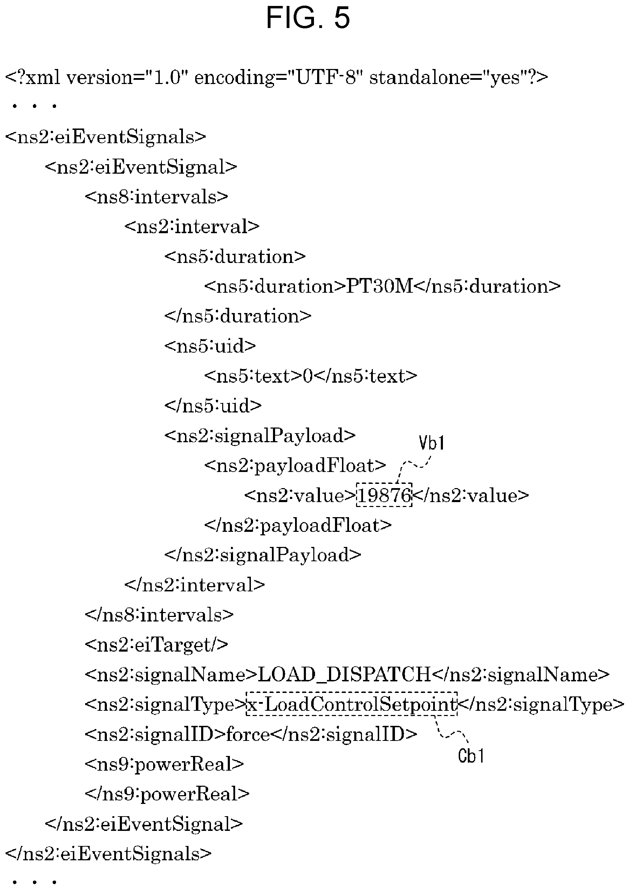

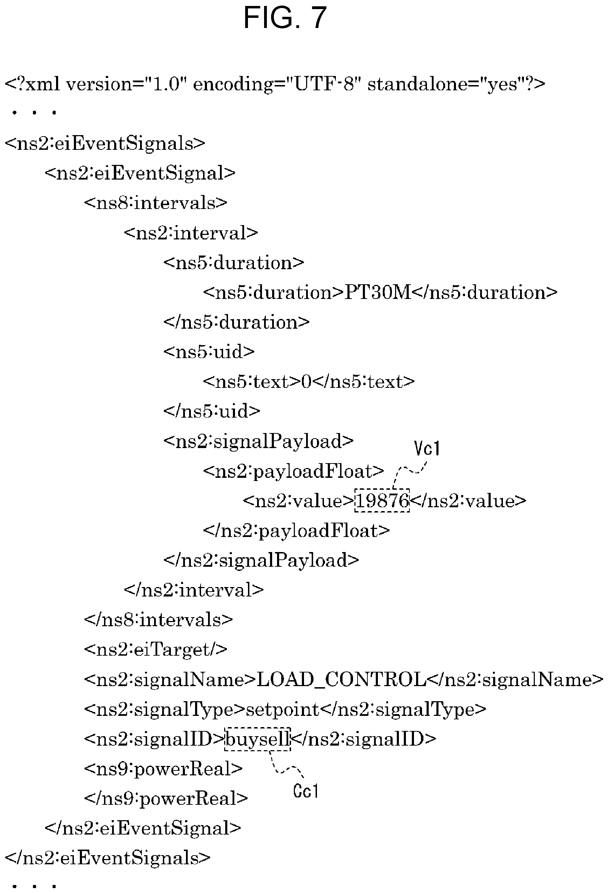

Fig. 3 illustrates an example in which the operation mode of the storage battery 20 is switched to the first mode by changing the content of "signalName" inside "eiEventSignals". As illustrated in Fig. 3, in the case where the operation mode of the storage battery 20 is set to the first mode, for example, the content of "signalName" may be specified as "LOAD_CONTROL" as indicated by Ca1 illustrated in Fig. 3. Thus, the operation mode of the storage battery 20 can be set to the first mode, i.e., the constant selling/buying power mode. In this case, for example, the selling/buying power that is controlled so as to be constant may be specified by specifying the content of "value" inside "payloadFloat" as indicated by Va1 illustrated in Fig. 3. Va1 illustrated in Fig. 3 represents an example in which the selling/buying power that is controlled so as to be constant is specified as 19876 kW. The specified selling/buying power in Fig. 3 may be in units of kW when assuming an industrial storage battery such as one in a factory. In addition, the specified selling/buying power in Fig. 3 may be in units of W when assuming a domestic storage battery. This also applies to Figs. 5 and 7 below.

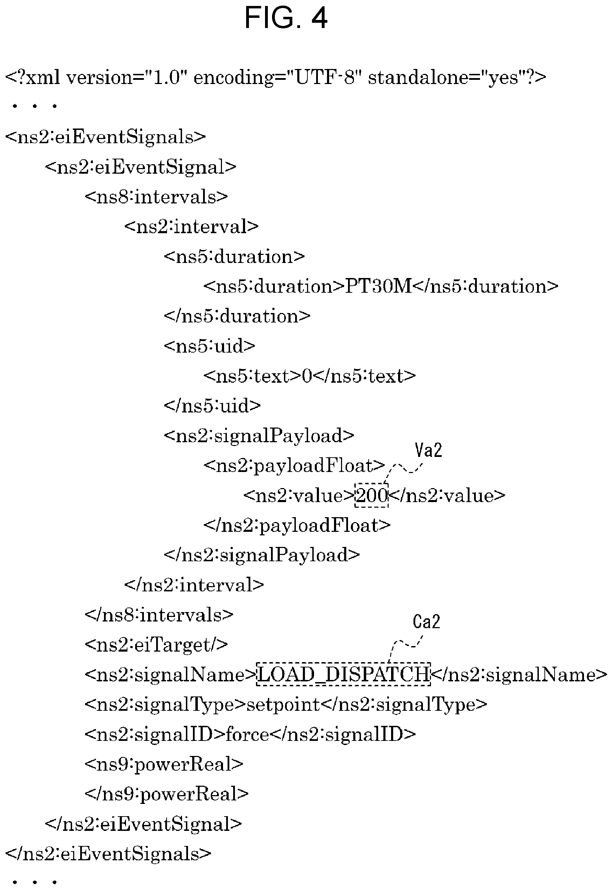

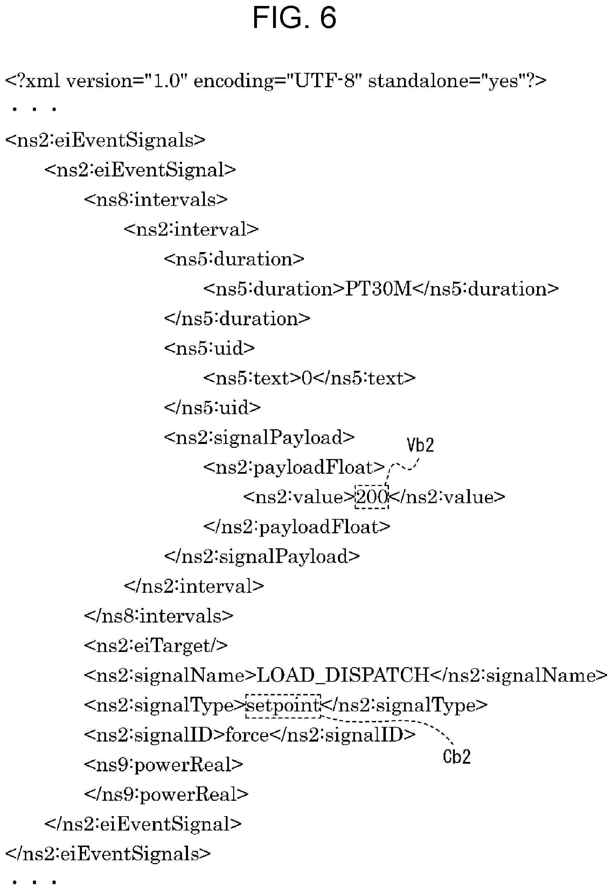

Fig. 4 illustrates an example in which the operation mode of the storage battery 20 is switched to the second mode by changing the content of "signalName" inside "eiEventSignals". As illustrated in Fig. 4, in the case where the operation mode of the storage battery 20 is set to the second mode, for example, the content of "signalName" may be specified as "LOAD_DISPATCH" as indicated by Ca2 illustrated in Fig. 4. Thus, the operation mode of the storage battery 20 can be set to the second mode, i.e., the constant charging/discharging power mode. In this case, for example, the charging/discharging power that is controlled so as to be constant may be specified by specifying the content of "value" inside "payloadFloat" as indicated by Va2 illustrated in Fig. 4. Va2 illustrated in Fig. 4 represents an example in which the charging/discharging power that is controlled so as to be constant is specified as 200 kW. The specified charging/discharging power in Fig. 4 may be in units of kW when assuming an industrial storage battery such as one in a factory. In addition, the specified charging/discharging power in Fig. 4 may be in units of W when assuming a domestic storage battery. This also applies to Figs. 6 and 7 below.

Fig. 5 illustrates an example in which the operation mode of the storage battery 20 is switched to the first mode by changing the content of "signalType" inside "eiEventSignals". As illustrated in Fig. 5, in the case where the operation mode of the storage battery 20 is set to the first mode, for example, the content of "signalType" may be specified as "x-LoadControlSetpoint" as indicated by Cb1 illustrated in Fig. 5. Thus, the operation mode of the storage battery 20 can be set to the first mode, i.e., the constant selling/buying power mode. In this case, for example, the selling/buying power that is controlled to be constant may be specified by specifying the content of "value" inside "payloadFloat" as indicated by Vb1 illustrated in Fig. 5. Vb1 illustrated in Fig. 5 represents an example in which selling/buying power that is controlled so to be constant is specified as 19876 kW.

Fig. 6 illustrates an example in which the operation mode of the storage battery 20 is switched to the second mode by changing the content of "signalType" inside "eiEventSignals". As illustrated in Fig. 6, in the case where the operation mode of the storage battery 20 is set to the second mode, for example, the content of "signalType" may be specified as "setpoint" as indicated by Cb2 illustrated in Fig. 6. Thus, the operation mode of the storage battery 20 can be set to the second mode, i.e., the constant charging/discharging power mode. In this case, for example, the charging/discharging power that is controlled so as to be constant may be specified by specifying the content of "value" inside "payloadFloat" as indicated by Vb2 illustrated in Fig. 6. Vb2 illustrated in Fig. 6 represents an example in which the charging/discharging power that is controlled so as to be constant is specified as 200 kW.

Fig. 7 illustrates an example in which the operation mode of the storage battery 20 is switched to the first mode by changing the content of "signalID" inside "eiEventSignals". In the case where the operation mode of the storage battery 20 is set to the first mode, the content of "signalID" inside "eiEventSignals" may be arbitrarily specified as abcdef, for example. For example, in the case where the operation mode of the storage battery 20 is set to the first mode, the content of "signal ID" may be specified in an arbitrary manner as buysell as indicated by Cc1 illustrated in Fig. 7. Thus, the operation mode of the storage battery 20 can be set to the first mode, i.e., the constant selling/buying power mode. In this case, for example, the selling/buying power that is controlled so as to be constant may be specified by specifying the content of "value" inside "payloadFloat" as indicated by Vc1 illustrated in Fig. 7. Vc1 illustrated in Fig. 7 represents an example in which the selling/buying power that is controlled so as to be constant is specified as 19876 kW.

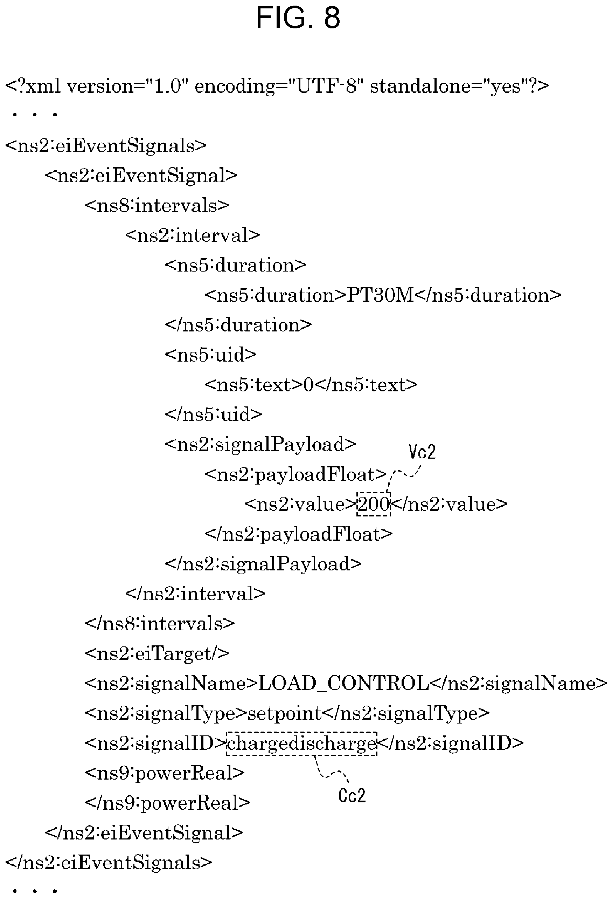

Fig. 8 illustrates an example in which the operation mode of the storage battery 20 is switched to the second mode by changing the content of "signalID" inside "eiEventSignals". In the case where the operation mode of the storage battery 20 is set to the second mode, the content of "signalID" inside "eiEventSignals" may be arbitrarily specified so as to be different to that in the first mode such as vwxyz, for example. For example, in the case where the operation mode of the storage battery 20 is set to the second mode, the content of "signal ID" may be arbitrarily specified as chargedischarge as indicated by Cc2 illustrated in Fig. 8. Thus, the operation mode of the storage battery 20 can be set to the second mode, i.e., the constant charging/discharging power mode. In this case, for example, the charging/discharging power that is controlled so as to be constant may be specified by specifying the content of "value" inside "payloadFloat" as indicated by Vc2 illustrated in Fig. 8. Vc2 illustrated in Fig. 8 represents an example in which the charging/discharging power that is controlled so as to be constant is specified as 200 kW.

### (Examples of Control of Storage Battery)

Next, a number of examples of typical ways in which the storage battery 20 in the system 1 is controlled will be described.

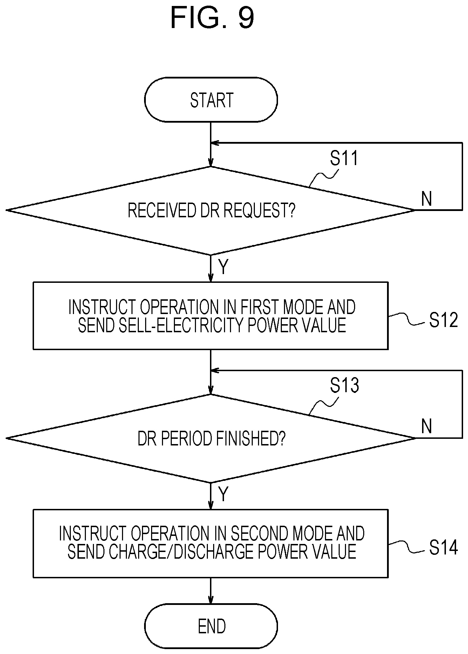

Figs. 9 to 12 are flowcharts illustrating examples of an operation in which the server 10 of the system 1 sends a control signal for controlling the storage battery 20 of the power control system 100. In Figs. 9 to 12, operation of the server 10 may be operation based on processing performed by the server control unit 12 of the server 10.

Furthermore, an operation in which the server 10 performs "sending" or "receiving" may be an operation in which the server communication unit 16 of the server 10 performs the "sending" or "receiving". Furthermore, an operation in which the server 10 stores or reads prescribed information may be an operation in which the server control unit 12 stores information in the server storage unit 14 or reads information from the server storage unit 14.

### (Control Example 1)

Fig. 9 is a flowchart illustrating an example in which the first mode and the second mode of the storage battery 20 are switched between in accordance with whether or not it is a DR period. At the time when the operation illustrated in Fig. 9 begins, for example, it may be assumed that the server 10 has not received a DR request.

When the operation illustrated in Fig. 9 begins, the server 10 determines whether or not a DR request has been received from the information-processing device of the electric utility company 200 (Step S11). When a DR request has not been received in Step S11, the server 10 may wait to receive a DR request.

When a DR request has been received in Step S11, the server 10 instructs operation in the first mode (Step S12). In Step S12, the server 10 sends a control signal that causes the storage battery 20 to operate in the first mode to the storage battery 20 or to the power control systems 100 connected to the storage battery 20. Furthermore, in Step S12, the server 10 may send a power value at which the first mode, i.e., the selling/buying power is controlled to be constant to the storage battery 20. When the control signal is sent from the server 10 in Step S12, the storage battery 20 that receives the control signal may operate in the first mode (at the specified power value). In this case, the storage battery 20 may start a DR period at the timing specified in the DR request and may operate in the first mode during the DR period.

Once operation in the first mode has been instructed in Step S12, the server 10 determines whether or not the DR period has finished (Step S13). If the DR period has not finished in Step S13, the server 10 may wait for the DR period to finish. In this case, the storage battery 20 may continue to operate in the first mode.

Once it has been determined that the DR period has finished in Step S13, the server 10 instructs operation in the second mode (Step S14). In Step S14, the server 10 sends a control signal that causes the storage battery 20 to operate in the second mode to the storage battery 20 or to the power control systems 100 connected to the storage battery 20. Furthermore, in Step S14, the server 10 may send a power value at which the second mode, i.e., the charging/discharging power is controlled to be constant to the storage battery 20. When the control signal is sent from the server 10 in Step S14, the storage battery 20 that receives the control signal may operate in the second mode (at the specified power value). In this case, the storage battery 20 may start operating in the second mode at a timing at which the DR period finishes and may continue operating in the second mode until the next DR request is received.

Thus, the server communication unit 16 of the server 10 may receive a demand response request sent from the information-processing device of the electric utility company 200. In this case, the server control unit 12 may control the server communication unit 16 to send a control signal that causes the storage battery 20 to operate in the first mode or the second mode to the storage battery 20 on the basis of the demand response request. Furthermore, the server control unit 12 may control the server communication unit 16 to send a control signal to the storage battery 20 that causes the storage battery 20 to operate in the first mode for a period of time based on the demand response request. Furthermore, the server control unit 12 may control the server communication unit 16 to send a control signal to the storage battery 20 that causes the storage battery 20 to operate in the second mode for a period of time based on the demand response request.

With the control device (server 10) of the storage battery 20 according to an embodiment, the storage battery 20 operates in the first mode with a constant selling/buying power during the DR period and the storage battery 20 operates in the second mode with a constant charging/discharging power outside the DR period. Therefore, the precision of power control can be increased by using the constant selling/buying power mode of the storage battery 20 in the DR period. Furthermore, degradation of the storage battery 20 can be suppressed by using the constant charging/discharging power mode of the storage battery 20 in periods other than the DR period. Therefore, the control device of the storage battery 20 according to an embodiment is able to suppress degradation of the storage battery while increasing the precision of power control when handling demand response requests and so forth.

Furthermore, with the control device of the storage battery 20 according to an embodiment, a situation in which the storage battery 20 always operates in a constant selling/buying power mode is avoided. Therefore, with the control device of the storage battery 20 according to an embodiment, the cost of the server 10 that issues control instructions for the storage battery 20 can be reduced. In addition, with the control device of the storage battery 20 according to an embodiment, the communication cost of the server 10 that issues control instructions for the storage battery 20 can also be reduced. Furthermore, a standard OpenADR protocol can be applies as it is to control of the storage battery 20 according to an embodiment. Therefore, not only is implementation easy, the cost of implementation can also be reduced.

### (Control Example 2)

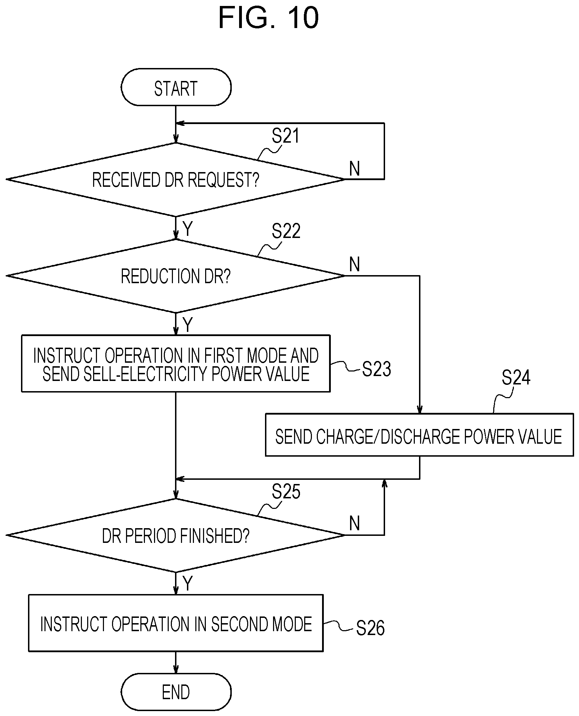

Fig. 10 is a flowchart illustrating an example in which the first mode and the second mode of the storage battery 20 are switched between in accordance with whether or not the DR request is a so-called reduction DR that requests lowering of power demand. At the time when the operation illustrated in Fig. 10 begins, for example, it may be assumed that the server 10 has not received a DR request.

When the operation illustrated in Fig. 10 begins, the server 10 determines whether or not a DR request has been received from the information-processing device of the electric utility company 200 (Step S21). When a DR request has not been received in Step S21, the server 10 may wait to receive a DR request.

When a DR request has been received in Step S21, the server 10 determines whether the received DR request is a so-called reduction DR that requests lowering of the power demand (Step S22). If it is determined that the DR request is a reduction DR in Step S22, the server 10 instructs operation in the first mode (Step S23). In Step S23, the server 10 sends a control signal that causes the storage battery 20 to operate in the first mode to the storage battery 20 or to the power control systems 100 connected to the storage battery 20. Furthermore, in Step S23, the server 10 may send a power value at which the first mode, i.e., the selling/buying power is controlled to be constant to the storage battery 20. When the control signal is sent from the server 10 in Step S23, the storage battery 20 that receives the control signal may operate in the first mode (at the specified power value). In this case, the storage battery 20 may start a DR period at the timing specified in the DR request and may operate in the first mode during the DR period.

If it is determined that the DR request is not a reduction DR in Step S22 (for example, the DR request is a so-called increase DR requesting that the power be increased), the server 10 may send a power value at which the second mode, i.e., the charging/discharging power is controlled to be constant to the storage battery 20 (Step S24) .

Once operation in the first mode has been instructed in Step S23, the server 10 determines whether or not the DR period has finished (Step S25). Furthermore, the server 10 may perform the operation of Step S25 after Step S24. If the DR period has not finished in Step S25, the server 10 may wait for the DR period to finish. In this case, the storage battery 20 may continue to operate in the first mode.

Once it has been determined that the DR period has finished in Step S25, the server 10 instructs operation in the second mode (Step S26). In Step S26, the server 10 sends a control signal that causes the storage battery 20 to operate in the second mode to the storage battery 20 or to the power control systems 100 connected to the storage battery 20. Furthermore, in Step S26 (not Step S24), the server 10 may send a power value at which the second mode, i.e., the charging/discharging power is controlled to be constant to the storage battery 20. When the control signal is sent from the server 10 in Step S26, the storage battery 20 that receives the control signal may operate in the second mode (at the specified power value). In this case, the storage battery 20 may start operating in the second mode at a timing at which the DR period finishes and may continue operating in the second mode until the next DR request is received.

Thus, the server control unit 12 may control the server communication unit 16 to send a control signal that causes the storage battery 20 to operate in the first mode to the storage battery 20 on the basis of a request that is a demand response request requesting a reduction in the power demand. In addition, the server control unit 12 may control the server communication unit 16 to send a control signal that causes the storage battery 20 to operate in the second mode to the storage battery 20 on the basis of a request that is a demand response request requesting an increase in the power demand.

With the control device (server 10) of the storage battery 20 according to an embodiment, operation of the storage battery 20 is switched between the first mode and the second mode in accordance with whether or not a DR request is a reduction DR. Therefore, the control device (server 10) of the storage battery 20 according to an embodiment can realize the same effects as the above-described Control Example 1.

### (Control Example 3)

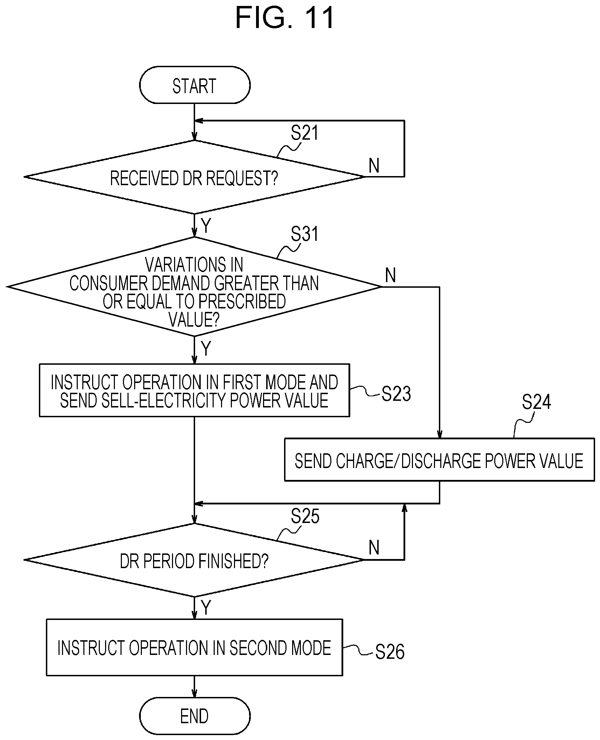

Fig. 11 is a flowchart illustrating an example in which the first mode and the second mode of the storage battery 20 are switched between in each power control system 100 at a consumer facility in accordance with whether variations in the demand for power in the power control system 100 are comparatively large.

In the operation illustrated in Fig. 11, the operation of Step S31 is performed instead of the operation of Step S22 illustrated in Fig. 10.

In other words, in the operation illustrated in Fig. 10, when a DR request is received in Step S21, it is determined whether the DR request is a reduction DR in Step S22. In the case where the DR request is a reduction DR in Step S22, the storage battery 20 is instructed to operate in the first mode in Step S23. In addition, in the operation illustrated in Fig. 10, in the case where the DR request is not a reduction DR in Step S22, information relating to operation in the second mode is sent to the storage battery 20 in Step S24.

In contrast, in the operation illustrated in Fig. 11, when a DR request is received in Step S21, it is determined whether or not variations in the power demand of the consumer facility having the power control system 100 that received the DR request are greater than a prescribed value (Step S31). In Step S31, the prescribed value used to determine the size of the variations in the power demand may be a different value for each consumer facility or may be the same value for at least some of the consumer facilities.

In the operation illustrated in Fig. 11, in the case where the variations in power demand are greater than the prescribed value in Step S31, the storage battery 20 is instructed to operate in the first mode in Step S23. In addition, in the operation illustrated in Fig. 11, in the case where the variations in power demand are not greater than the prescribed value in Step S31, information relating to operation in the second mode is sent to the storage battery 20 in Step S24.

Thus, the server control unit 12 may control the server communication unit 16 so as to send a control signal that causes the storage battery 20 to operate in the first mode to the storage battery 20 when the width of changes over time in the power demand in the power control system 100 exceeds a prescribed range. Furthermore, the server control unit 12 may control the server communication unit 16 so as to send a control signal that causes the storage battery 20 to operate in the second mode to the storage battery 20 when the width of changes over time in the power demand in the power control system 100 does not exceed a prescribed range.

With the control device (server 10) of the storage battery 20 according to an embodiment, operation of the storage battery 20 is switched between the first mode and the second mode in accordance with whether or not changes in the power demand of the consumer are comparatively large. Therefore, the control device (server 10) of the storage battery 20 according to an embodiment can realize the same effects as the above-described Control Example 1.

### (Control Example 4)

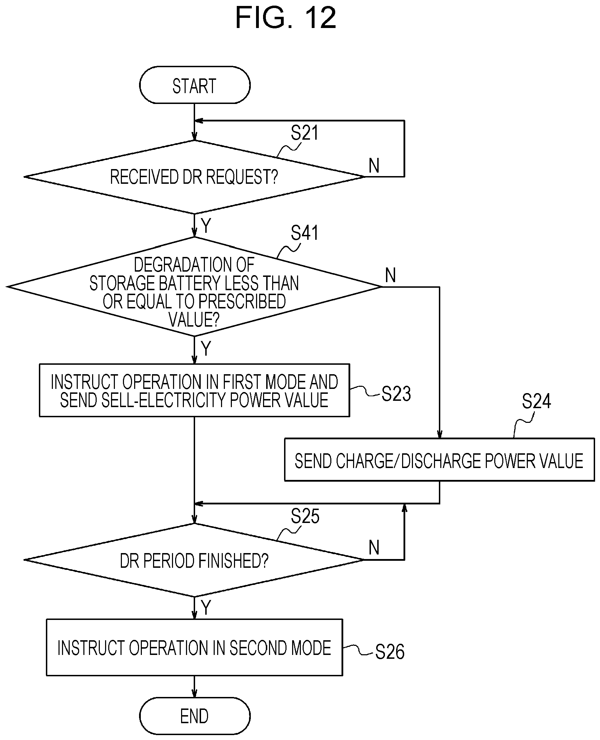

Fig. 12 is a flowchart illustrating an example in which the first mode and the second mode of the storage battery 20 are switched between in each power control system 100 at a consumer facility in accordance with whether or not the degree of degradation of the storage battery 20 in the power control system 100 is comparatively small.

In the operation illustrated in Fig. 12, the operation of Step S41 is performed instead of the operation of Step S22 illustrated in Fig. 10.

In other words, in the operation illustrated in Fig. 12, when a DR request is received in Step S21, it is determined whether or not the degree of degradation of the storage battery 20 in the power control system 100 that received the DR request is smaller than a prescribed value (Step S41). In Step S41, "the degree of degradation of the storage battery 20 is smaller than a prescribed value" or "the degree of degradation of the storage battery 20 is less than or equal to a prescribed value" may refer to a state in which the degree of degradation of the storage battery 20 is comparatively small, for example, a state in which the storage battery 20 is not very (only slightly) degraded. On the other hand, "the degree of degradation of the storage battery 20 is greater than a prescribed value" or "the degree of degradation of the storage battery 20 is greater than or equal to a prescribed value" may refer to a state in which the degree of degradation of the storage battery 20 is comparatively large, for example, a state in which the storage battery 20 is considerably (to some extent) degraded. In Step S41, the prescribed value used to determine the smallness of the degree of degradation of the storage battery 20 may be, for example, a different value for each consumer facility having the storage battery 20 or may be the same value for at least some of the consumer facilities having the storage batteries 20. In addition, in Step S41, the value used when determining the smallness of the degree of degradation of the storage battery 20 may be, for example, a value representing a state of degradation (state of health (SOH)) indicating the state of health of the storage battery 20 or may be another indicator.

In the operation illustrated in Fig. 12, in the case where the degree of degradation of the storage battery 20 is less than or equal to the prescribed value in Step S41, the storage battery 20 is instructed to operate in the first mode in Step S23. Furthermore, in the operation illustrated in Fig. 12, in the case where the degree of degradation of the storage battery 20 is not less than or equal to the prescribed value in Step S41 (for example, the case where the degree of degradation of the storage battery 20 is greater than or equal to the prescribed value), information relating to operation in the second mode may be sent to the storage battery 20 in Step S24.

Thus, in the case where an indicator indicating the degree of degradation of the storage battery 20 is less than or equal to a prescribed value, i.e., the case where the degree of degradation of the storage battery 20 is less than or equal to a prescribed value, the server control unit 12 may control the server communication unit 16 to send to the storage battery 20 a control signal that causes the storage battery 20 to operate in the first mode. In addition, in the case where an indicator indicating the degree of degradation of the storage battery 20 is greater than or equal to a prescribed value, i.e., the case where the degree of degradation of the storage battery 20 is greater than or equal to a prescribed value, the server control unit 12 may control the server communication unit 16 to send to the storage battery 20 a control signal that causes the storage battery 20 to operate in the second mode.

With the control device (server 10) of the storage battery 20 according to an embodiment, operation of the storage battery 20 is switched between the first mode and the second mode in accordance with whether or not the degree of degradation of the storage battery 20 is comparatively small. Therefore, the control device (server 10) of the storage battery 20 according to an embodiment can realize the same effects as the above-described Control Example 1.

The above embodiments have described as representative examples, but it would be clear to those skilled in the art that may changes and substitutions could be made within the spirit and scope of the present disclosure. Accordingly, the present disclosure should not be interpreted as being limited by the above-described embodiments, and various modifications or changes are possible without departing from the scope of the claims. For example, the functions included in each means or step can be rearranged in a manner so as to not be logically inconsistent, and a plurality of means or steps can be combined into one means or step or divided into multiple means or steps.

For example, in the above-described embodiments, the number of storage batteries 20 controlled by the server 10 may be any arbitrary number of one or more. In other words, the control device of the storage battery 20 according to an embodiment may control a plurality of storage batteries 20. In this case, the communication unit of the control device may communicate with the plurality of storage batteries 20 in a wired or wireless manner. Furthermore, the control unit of the control device may control the communication unit to send a control signal that causes at least one of the plurality of storage batteries 20 to operate in the first mode or the second mode. In this case, the first mode may be a mode in which the width of changes over time in the power bought or sold by each power control system 100 connected to at least one of the plurality of storage batteries 20 is controlled to lie within a prescribed range. Furthermore, the second mode may be a mode in which the width of changes over time in the power charged to or discharged from each of at least one of the plurality of storage batteries 20 is controlled to lie within a prescribed range.

Furthermore, for example, in the above-described embodiments, the power control system 100 is described as a HEMS, but does not have to be a HEMS. The power control system 100 may be any suitable control device that controls electrical equipment 30 installed in a consumer facility. For example, the power control system 100 may be a building energy management system (BEMS) that controls electrical equipment 30 installed in a building or the like. Alternatively, the power control system 100 may be a battery management system (BMS) that controls power storage devices serving as the electrical equipment 30. In addition, the power control system 100 may be a control device built into electrical equipment 30 such as a load or a distributed power supply.

For example, in the embodiments described above, the period during which a prescribed event takes place is described as a demand response period during which a demand response takes place, but this does not have to be the case. The period during which a prescribed event takes place may be a period during which any event takes place accompanied by transmission of a message to the server 10 from the power control system 100. In such as case, the demand response may be read as any such event in the above description.

In addition, for example, in the above-described embodiments, the power control system 100 is described as consisting of an information-processing device installed in a consumer facility, but this does not have to be the case. The power control system 100 may, for example, be configured so as to have all or some of its processing and functions provided via a network N by a group of information processing devices consisting of a plurality of information processing devices such as a cloud server or a blockchain. Similarly, the server 10 may be configured to have all or some of its processing and functions provided via a network N by a group of information processing devices. In such a case, the power control system 100 and the server 10 may be considered to include a group of information processing devices such as a cloud server or a blockchain.

The above-described embodiments are not limited to only being implemented as the system 1. For example, the above-described embodiments may be implemented as a method of controlling a control device (server 10) included in the system 1. In addition, for example, the above-described embodiments may be implemented as a program to be executed by a control device (server 10) included in the system 1.

Sustainable development goals (SDGs) are 17 international goals adopted at a UN Summit held in September 2015. The control device of the storage battery 20 and so on according to an embodiment can contribute to achieving, for example, "7. Make clean energy available to all", "9. Create a foundation for industry and technological innovation", and "11. Create towns where people can continue to live" among the 17 SDGs.

### Reference Signs List

1 system
10 server
12 server control unit
14 server storage unit
16 server communication unit
20 storage battery
30 electrical equipment
40 controller
100 power control system
200 electric utility company

## Claims

1. A control device for controlling a storage battery, the control device comprising:
a communication unit that communicates with the storage battery in a wired or wireless manner; and
a control unit that controls the communication unit to send a control signal to the storage battery that causes the storage battery to operate in a first mode or a second mode,
wherein the first mode is a mode in which a width of changes over time in power bought or sold by a power control system connected to the storage battery is controlled to stay within a prescribed range, and
the second mode is a mode in which a width of changes over time in power charged to or discharged from the storage battery is controlled to stay within a prescribed range.

2. The control device according to Claim 1,
wherein the first mode is a mode in which charging and discharging of the storage battery is controlled so that a width of changes over time in power bought or sold by the power control system connected to the storage battery is controlled to stay within a prescribed range.

3. The control device according to Claim 1 or 2,
wherein the first mode is a mode in which power bought or sold by the power control system connected to the storage battery is controlled to be constant.

4. The control device according to any one of Claims 1 to 3,
wherein the second mode is a mode in which the power charged to or discharged from the storage battery is controlled to be constant.

5. The control device according to any one of Claims 1 to 4,
wherein the communication unit receives a demand response request send from an electric utility company, and
the control unit controls the communication unit to send a control signal, to the storage battery, that causes the storage battery to operate in the first mode or the second mode on the basis of the demand response request.

6. The control device according to Claim 5,
wherein the control unit controls the communication unit to send a control signal, to the storage battery, that causes the storage battery to operate in the first mode during a period based on the demand response request and controls the communication unit to send a control signal, to the storage battery, that causes the storage battery to operate in the second mode in a period other than the period based on the demand response request.

7. The control device according to Claim 5,
wherein the control unit controls the communication unit to send a control signal, to the storage battery, that causes the storage battery to operate in the first mode on the basis of a request to reduce power demand, as the demand response request, and controls the communication unit to send a control signal, to the storage battery, that causes the storage battery to operate in the second mode on the basis of a request to increase power demand, as the demand response request.

8. The control device according to Claim 5,
wherein the control unit controls the communication unit to send a control signal, to the storage battery, that causes the storage battery to operate in the first mode in a case where a width of changes over time in power demand in the power control system exceeds a prescribed range and controls the communication unit to send a control signal, to the storage battery, that causes the storage battery to operate in the second mode in a case where a width of changes over time in power demand in the power control system does not exceed a prescribed range.

9. The control device according to any one of Claims 1 to 5,
wherein the control unit controls the communication unit to send a control signal, to the storage battery, that causes the storage battery to operate in the first mode in a case where an indicator that indicates a state of degradation of the storage battery is less than or equal to a prescribed value and controls the communication unit to send a control signal, to the storage battery, that causes the storage battery to operate in the second mode in a case where an indicator that indicates a state of degradation of the storage battery is greater than or equal to a prescribed value.

10. The control device according to any one of Claims 1 to 9,
wherein the control unit controls the communication unit so that the communication unit communicates with the storage battery using a protocol that complies with Open ADR.

11. A control device for controlling a plurality of storage batteries, the control device comprising:
a communication unit that communicates with the plurality of storage batteries in a wired or wireless manner; and
a control unit that controls the communication unit to send a control signal to at least one of the plurality of storage batteries that causes the storage battery to operate in a first mode or a second mode,
wherein the first mode is a mode in which a width of changes over time in power bought or sold by each power control system connected to each of at least one of the plurality of storage batteries is controlled to stay within a prescribed range, and
the second mode is a mode in which a width of changes over time in power charged to or discharged from each of at least one of the plurality of storage batteries is controlled to stay within a prescribed range.

12. A method for controlling a storage battery, the method comprising:
a communication step of communicating with the storage battery in a wired or wireless manner; and
a control step of performing control to send, to the storage battery, a control signal that causes the storage battery to operate in a first mode or a second mode,
wherein the first mode is a mode in which a width of changes over time in power bought or sold by a power control system connected to the storage battery is controlled to stay within a prescribed range, and
the second mode is a mode in which a width of changes over time in power charged to or discharged from the storage battery is controlled to stay within a prescribed range.

13. A program for controlling a storage battery, the program causing a computer to execute:
a communication step of communicating with the storage battery in a wired or wireless manner; and
a control step of performing control to send, to the storage battery, a control signal that causes the storage battery to operate in a first mode or a second mode,
wherein the first mode is a mode in which a width of changes over time in power bought or sold by a power control system connected to the storage battery is controlled to stay within a prescribed range, and
the second mode is a mode in which a width of changes over time in power charged to or discharged from the storage battery is controlled to stay within a prescribed range.
